# EUROPEAN PATENT SPECIFICATION

(11) **EP 3 165 620 B1**
(45) Date of publication and mention of the grant of the patent: **30.09.2020**
(21) Application number: 16197233.6
(22) Date of filing: 04.11.2016
(51) Int. Cl.: C22C 1/00, B22F 5/00, C22C 1/04, C22C 1/06, C22F 1/04, B33Y 10/00, B22F 1/00, B22F 3/105, B22F 3/115, C22C 21/08, C22F 1/047, B33Y 80/00, B33Y 70/00

(54) **AL-MG-SI ALLOY WITH SCANDIUM FOR THE INTEGRAL CONSTRUCTION OF ALM STRUCTURES**
AL-MG-SI-LEGIERUNG MIT SCANDIUM ZUR INTEGRALEN KONSTRUKTION VON ADDITIVEN SCHICHTFERTIGUNGSSTRUKTUREN
ALLIAGE AL-MG-SI AU SCANDIUM POUR LA CONSTRUCTION D'UN SEUL TENANT DE STRUCTURES PAR IMPRESSION 3D

(30) Priority: 04.11.2015 DE 102015221643
(43) Date of publication of application: 10.05.2017
(73) Proprietor: Apworks GmbH, 82024 Taufkirchen (DE)
(72) Inventor: LENCZOWSKI, Blanka, 85579 Neubiberg (DE)
(74) Representative: LKGLOBAL Lorenz & Kopf PartG mbB Patentanwälte

(56) References cited:
- CN-A- 104 694 800
- US-A- 5 597 529
- US-A1- 2006 093 512
- US-A1- 2007 240 796
- US-A1- 2014 271 322
- US-A1- 2015 167 130
- ROKHLIN L L ET AL: "Joint effect of scandium and zirconium on the recrystallization of aluminum Al-Mg2Si alloys", RUSSIAN METALLURGY, M A I K NAUKA - INTERPERIODICA, RU, vol. 2015, no. 5, 2 September 2015 (2015-09-02), pages 381-388, XP035533971, ISSN: 0036-0295, DOI: 10.1134/S0036029515050134 [retrieved on 2015-09-02]
- SMOLA ET AL: "Annealing effects in Al-Sc alloys", MATERIALS SCIENCE AND ENGINEERING: A, ELSEVIER, AMSTERDAM, NL, vol. 462, no. 1-2, 1 May 2007 (2007-05-01) , pages 370-374, XP022054991, ISSN: 0921-5093, DOI: 10.1016/J.MSEA.2005.11.075
- ROYSET J ET AL: "SCANDIUM IN ALUMINIUM ALLOYS", INTERNATIONAL MATERIALS REV, ASM INTERNATIONAL, MATERIALS PARK, US, vol. 50, no. 1, 1 February 2005 (2005-02-01), pages 19-44, XP008065171, ISSN: 0950-6608, DOI: 10.1179/174328005X14311
- V.G Davydov ET AL: "Scientific principles of making an alloying addition of scandium to aluminium alloys", Materials Science and Engineering A, vol. 280, no. 1, 1 March 2000 (2000-03-01) , pages 30-36, XP055186812, ISSN: 0921-5093, DOI: 10.1016/S0921-5093(99)00652-8

## Description

The present invention relates to an aluminium alloy, a method for producing a lightweight metal workpiece, a lightweight metal workpiece comprising the aluminium alloy, and also the use of the aluminium alloy to produce heat-resistant lightweight metal workpieces by means of additive layer manufacturing (ALM) and/or spraying methods or for engine components, cylinder heads, crank housings, heat-resistant safety component parts, air-conditioning system components, structural aircraft component parts, in particular in the case of supersonic aircraft, power unit segments, pylons, or as coating material for component parts.

### BACKGROUND OF THE INVENTION

Within the scope of ALM technology, there are different production methods, such as powder bed methods, powder jet methods, or wire-based processes. For heavily loaded structures/component parts, process technologies of this type provide a load-optimised component part construction with versatile individual design possibilities, for example by integrated and integral material construction from different or also "alloy-related" materials. The generative methods support maximum utilisation of materials alongside component part complexity, depending on the manufacturing method. Here, what is made possible *inter alia* is customised manufacture of near-end-contour component parts with potentially also local material adaptation/change/reinforcement integrated directly in the process, with integration of a number of, or at least two material powder containers or material wire guides. For applications of this type, it is sometimes advantageous to use materials having similar characteristics, such as AlMg3Si1 or AlMg5Si2, which can each be doped with scandium and zirconium. Properties of a structure can thus be selectively controlled with also smaller variations in the composition or in the structure. In order to be able to optimally utilise the potential of process technologies of this type, the use of process-specific materials is necessary.

Nowadays, standard materials are primarily used for ALM processes. In the case of titanium alloys the material is especially Ti6Al4V, and in the case of aluminium alloys it is AlSi10Mg.

ALM processes, particularly in air travel, constitute technological competition for precision casting techniques, which are used primarily for producing complex component parts for air travel or medical technology, which component parts are then thin-walled and load-optimised depending on the alloy. In the case of precision casting the aluminium alloy A357(AlSi7Mg0.6) is primarily used for thin-walled structures, and A201/KO1 (AlCu5MgTiAg) is primarily used as a firmer variant for component parts having greater wall thicknesses. The key starting criterion for the material properties of the casting alloys is the casting structure, which constitutes the basis for a subsequent heat treatment, since in the case of cast component parts there is no further thermo-mechanical treatment, as is also the case with ALM component parts.

However, in order to be able to utilise the advantages of ALM process technology to the full extent depending on the application of the component parts, it is necessary to design process-optimised alloys.

US 2015/0167130 A1 relates to light metal material having a tensile strength of > 180 MPa at room temperature as well as to a method for producing such light metal material and the use thereof as a piston component in a rotary piston engine.

US 2007/0240796 A1 concerns cast aluminium alloys comprising 1.0-8.0 wt.-% magnesium, > 1.0-4.0 wt.-% silicon, 0.01-<0.5 wt.-% scandium, 0.005-0.2 wt.-% titanium, 0-0.5 wt.-% of at least one element or selected from the group consisting of zirconium, hafnium, molybdenum, terbium, niobium, gadolinium, erbium and vanadium, 0-0.8 wt.-% manganese, 0-0.3 wt.-% chromium, 0-1.0 wt.-% copper, 0-0.1 wt.-% zinc, 0-0.6 wt.-% iron, 0-0.004 wt.-% beryllium, and the remainder of aluminium with further impurities to an individual maximum of 0.1 wt.-% and totally maximally 0.5 wt.-%.

It is therefore desirable to provide an aluminium alloy. It is also desirable to provide an aluminium alloy which can be integrated directly in the production process in local or integral component part manufacture. It is additionally desirable to provide an aluminium alloy by means of which complex thermo-mechanical treatment can be avoided and therefore further costly and time-consuming process steps can be saved. It is also desirable to provide an aluminium alloy which enables a heat treatment without material damage and/or thermal stresses/warping. In addition, it is desirable to provide an aluminium alloy with which it is possible to dispense with complex component part levelling and with which the component part reproducibility and economic efficiency can also be increased. In particular, it is therefore desirable to provide an aluminium alloy which is suitable for producing lightweight metal workpieces, in particular by ALM process technologies and/or spraying methods.

One object of the present invention is therefore to provide an aluminium alloy. A further object of the present invention is to enable the aluminium alloy to be directly integrated in the production process in local or integral component part manufacture. A further object of the present invention is to avoid complex thermo-mechanical treatment and therefore further costly and time-consuming process steps can be saved by means of the aluminium alloy. A further object of the present invention is to allow the aluminium alloy to undergo a heat treatment without material damage and/or thermal stresses/warping. A further object of the present invention is to dispense with complex component part levelling and to also be able to increase the component part reproducibility and economic efficiency on account of the use of the aluminium alloy. A further object of the present invention is to make the aluminium alloy suitable for producing lightweight metal workpieces, in particular by ALM process technologies and/or spraying methods.

These objects are achieved by the subjects defined in the claims. Advantageous embodiments are disclosed by dependent claims.

### SUMMARY OF THE INVENTION

Accordingly, a first subject of the present invention is an aluminium alloy as described in claim 1.

The aluminium alloy according to the invention can be integrated directly in the production process in local or integral component part manufacture. A further advantage is that complex thermo-mechanical treatment can be avoided and therefore further costly and time-consuming process steps can be saved by means of the aluminium alloy according to the invention. A further advantage is the fact that the aluminium alloy according to the invention enables a heat treatment without material damage and/or thermal stresses/warping. A further advantage is that it is possible to dispense with complex component part levelling and to also increase the component part reproducibility and economic efficiency on account of the use of the aluminium alloy according to the invention. A further advantage is in particular the fact that the aluminium alloy according to the invention is suitable for producing lightweight metal workpieces, in particular by ALM process technologies and/or spraying methods.

By way of example, the alloy contains 3.5 to 5.5 % by weight, in relation to the total weight of the alloy, of magnesium (Mg) and/or 1.1 to 4.0 % by weight, in particular 1.1 to 3.0 % by weight, in relation to the total weight of the alloy, of silicon (Si).

By way of example, the alloy contains 0.01 to 0.2 % by weight, in particular 0.05 to 0.15 % by weight, in relation to the total weight of the alloy, of titanium (Ti) and/or 0.2 to 0.75 % by weight, in particular 0.25 to 0.7 % by weight, in relation to the total weight of the alloy, of scandium (Sc).

By way of example, the amount of zirconium (Zr) is <50 % of the amount of scandium (Sc).

The present invention also provides a method for producing a lightweight metal workpiece as described in claim 12.

The present invention also relates to a lightweight metal workpiece as defined in claim 13.

The present invention also relates to the uses of the aluminium alloy as defined in claims 14 and 15.

### DETAILED DESCRIPTION OF THE INVENTION

The present invention relates to an aluminium alloy as described in claim 1.

One requirement of the present invention is therefore that the aluminium alloy contains magnesium in an amount of from 3.0 to 6.0 % by weight, in relation to the total weight of the alloy. The aluminium alloy preferably contains magnesium in an amount of from 3.5 to 5.5 % by weight, in relation to the total weight of the alloy.

A further requirement of the present invention is that the aluminium alloy contains silicon in an amount of from >1.0 to 4.0 % by weight, in relation to the total weight of the alloy. The aluminium alloy preferably contains silicon in an amount of from 1.1 to 4.0 % by weight, in particular from 1.1 to 3.0 % by weight, in relation to the total weight of the alloy.

The aluminium alloy should be suitable in particular for producing heat-resistant lightweight metal workpieces. In order to improve the heat resistance, it is therefore essential that the aluminium alloy contains titanium and scandium.

The aluminium alloy therefore contains titanium in an amount of from 0.005 to 0.2 % by weight, in relation to the total weight of the alloy. The aluminium alloy preferably contains titanium in an amount of from 0.01 to 0.2 % by weight, in particular 0.05 to 0.15 % by weight, in relation to the total weight of the alloy. Titanium additionally reduces the electrical conductivity.

The aluminium alloy also contains scandium in an amount of from 0.1 to 0.75 % by weight, in relation to the total weight of the alloy. The aluminium alloy preferably contains scandium in an amount of from 0.2 to 0.75 % by weight, in particular 0.25 to 0.7 % by weight, in relation to the total weight of the alloy.

A further essential constituent of the present aluminium alloy is zirconium. Similarly to titanium and scandium, zirconium also improves the heat resistance.

The aluminium alloy contains zirconium in an amount of from 0.01 to 0.375 % by weight, in relation to the total weight of the alloy. The aluminium alloy preferably contains zirconium in an amount of from 0.02 to 0.35 % by weight, in particular 0.05 to 0.3 % by weight, in relation to the total weight of the alloy.

One advantage of the present invention is that the aluminium alloy contains high amounts of scandium in comparison to titanium and zirconium, and in particular the scandium amounts are higher than in conventional aluminium alloys.

One requirement of the present aluminium alloy is therefore that the amount of zirconium (Zr) and of titanium (Ti) in total corresponds at most to half the amount of scandium (Sc). In other words, the aluminium alloy contains zirconium (Zr) and titanium (Ti) in an amount that corresponds to ≤50 % of the amount of scandium (Sc).

Additionally or alternatively, the aluminium alloy contains zirconium (Zr) and titanium (Ti) in a total amount such that the ratio by weight of scandium (Sc) to zirconium (Zr) and titanium (Ti) [wt(Sc)/(wt(Zr)+wt(Ti))] is from 2:1 to 10:1. By way of example, the aluminium alloy contains zirconium (Zr) and titanium (Ti) in a total amount such that the ratio by weight of scandium (Sc) to zirconium (Zr) and titanium (Ti) [wt(Sc)/(wt(Zr)+wt(Ti))] is from 2:1 to 5:1.

An advantageous aluminium alloy contains scandium and zirconium in a specific ratio by weight.

In one embodiment of the present invention the amount of zirconium (Zr) is <50 % of the amount of scandium (Sc). By way of example, the amount of zirconium (Zr) in the aluminium alloy is <40 % of the amount of scandium (Sc).

Additionally or alternatively, the aluminium alloy contains zirconium (Zr) in an amount such that the ratio by weight of scandium (Sc) to zirconium (Zr) [wt(Sc)/wt(Zr)] is from 2:0.9 to 10:1. By way of example, the aluminium alloy contains zirconium (Zr) in an amount such that the ratio by weight of scandium (Sc) to zirconium (Zr) [wt(Sc)/wt(Zr)] is from 2:0.9 to 5:1.

The aluminium alloy therefore preferably consists of
3.5 to 5.5 % by weight, in relation to the total weight of the alloy, of magnesium (Mg), -1.1 to 4.0 % by weight, preferably 1.1 to 3.0 % by weight, in relation to the total weight of the alloy, of silicon (Si),
0.01 to 0.2 % by weight, preferably 0.05 to 0.15 % by weight, in relation to the total weight of the alloy, of titanium (Ti),
0.2 to 0.75 % by weight, preferably 0.25 to 0.7 % by weight, in relation to the total weight of the alloy, of scandium (Sc),
0.02 to 0.35 % by weight, preferably 0.05 to 0.3 % by weight, in relation to the total weight of the alloy, of zirconium (Zr),
0 to 0.5 % by weight, in relation to the total weight of the alloy, of at least one element selected from the group consisting of hafnium (Hf), molybdenum (Mo), terbium (Tb), niobium (Nb), gadolinium (Gd), erbium (Er), and vanadium (V),
0 to 0.8 % by weight, in relation to the total weight of the alloy, of manganese (Mn),
0 to 0.3 % by weight, in relation to the total weight of the alloy, of chromium (Cr),
0 to 1.0 % by weight, in relation to the total weight of the alloy, of copper (Cu),
0 to 0.05 % by weight, in relation to the total weight of the alloy, of zinc (Zn),
0 to 0.6 % by weight, in relation to the total weight of the alloy, of iron (Fe),
0 to 0.004 % by weight, in relation to the total weight of the alloy, of beryllium (Be), the rest being aluminium with further impurities individually of at most 0.1 % by weight in relation to the total weight of the alloy, and on the whole at most 0.5 % by weight, in relation to the total weight of the alloy, wherein the amount of zirconium (Zr) and of titanium (Ti) in total corresponds at most to half the amount of scandium (Sc).

In addition, at least one element selected from the group consisting of hafnium (Hf), molybdenum (Mo), terbium (Tb), niobium (Nb), gadolinium (Gd), erbium (Er), and vanadium (V) can be added to the aluminium alloy. In particular, 0 to 0.5 % by weight, in relation to the total weight of the alloy, of at least one element selected from the group consisting of hafnium (Hf), molybdenum (Mo), terbium (Tb), niobium (Nb), gadolinium (Gd), erbium (Er), and vanadium (V) can be added to the aluminium alloy.

In one embodiment, the aluminium alloy contains 0.001 to 0.5 % by weight, in relation to the total weight of the alloy, of at least one element selected from the group consisting of hafnium (Hf), molybdenum (Mo), terbium (Tb), niobium (Nb), gadolinium (Gd), erbium (Er), and vanadium (V). By way of example, the aluminium alloy contains 0.001 to 0.5 % by weight, in relation to the total weight of the alloy, of at least one element selected from the group consisting of hafnium (Hf), terbium (Tb), niobium (Nb), gadolinium (Gd), and vanadium (V).

In one embodiment the aluminium alloy contains 0.001 to 0.5 % by weight, in relation to the total weight of the alloy, of hafnium (Hf) and/or terbium (Tb). In one embodiment, the aluminium alloy contains 0.001 to 0.5 % by weight (in total), in relation to the total weight of the alloy, in relation to the total weight of the alloy, of hafnium (Hf) and terbium (Tb). Alternatively, the aluminium alloy contains 0.001 to 0.5 % by weight, in relation to the total weight of the alloy, of hafnium (Hf) or terbium (Tb).

If the aluminium alloy contains hafnium (Hf) and/or terbium (Tb), the amount of hafnium (Hf) and/or terbium (Tb) corresponds individually to at most ¼ of the amount of scandium (Sc). In other words, the aluminium alloy contains hafnium (Hf) and/or terbium (Tb) individually in an amount that corresponds to ≤25 % of the amount of scandium (Sc). By way of example, the aluminium alloy contains hafnium (Hf) and/or terbium (Tb) individually in an amount that corresponds to <25 % of the amount of scandium (Sc).

The aluminium alloy can also contain 0 to 0.8 % by weight of manganese (Mn), 0 to 0.3 % by weight of chromium (Cr), 0 to 1.0 % by weight of copper (Cu), 0 to 0.05 % by weight of zinc (Zn), 0 to 0.6 % by weight of iron (Fe), and 0 to 0.004 % by weight of beryllium (Be). The values in % by weight relate in each case to the total weight of the alloy.

It is particularly advantageous, however, when the aluminium alloy contains ≥0.001 % by weight, in relation to the total weight of the alloy, of at least one element selected from the group consisting of vanadium (V), gadolinium (Gd), chromium (Cr), copper (Cu), and zinc (Zn). By way of example, the aluminium alloy can contain 0.001 to 0.5 % by weight of vanadium (V), 0.001 to 0.5 % by weight of gadolinium (Gd), 0.001 to 0.3 % by weight of chromium (Cr), 0.001 to 1.0 % by weight of copper (Cu) and/or 0.001 to 0.05 % by weight of zinc (Zn). The values in % by weight relate in each case to the total weight of the alloy.

In one embodiment the aluminium alloy contains 0.001 to 0.5 % by weight of vanadium (V) or 0.001 to 0.5 % by weight of gadolinium (Gd) or 0.001 to 0.3 % by weight of chromium (Cr) or 0.001 to 1.0 % by weight of copper (Cu) or 0.001 to 0.05 % by weight of zinc (Zn). Alternatively, the aluminium alloy contains 0.001 to 0.5 % by weight of vanadium (V) and 0.001 to 0.5 % by weight of gadolinium (Gd) and 0.001 to 0.3 % by weight of chromium (Cr) and 0.001 to 1.0 % by weight of copper (Cu) and 0.001 to 0.05 % by weight of zinc (Zn). The values in % by weight relate in each case to the total weight of the alloy.

The addition of iron and/or manganese reduces the adhesive effect. It is therefore advantageous to add iron and/or manganese, preferably iron or manganese to the aluminium alloy.

The aluminium alloy therefore contains 0 to 0.8 % by weight, in relation to the total weight of the alloy, of manganese (Mn) and 0 to 0.6 % by weight, in relation to the total weight of the alloy, of iron (Fe).

By way of example, the aluminium alloy contains 0.05 to 0.6 % by weight, preferably 0.05 to 0.2 % by weight, in relation to the total weight of the alloy, of iron (Fe).

Additionally or alternatively, the aluminium alloy contains ≤0.15 % by weight or 0.4 to 0.8 % by weight, in relation to the total weight of the alloy, of manganese (Mn).

If the aluminium alloy contains iron and manganese, the aluminium alloy preferably contains 0.05 to 0.6 % by weight, preferably 0.05 to 0.2 % by weight, in relation to the total weight of the alloy, of iron (Fe) and ≤0.8 % by weight, in relation to the total weight of the alloy, of manganese (Mn).

The aluminium alloy can be provided in the form of a powder or wire. Methods for producing alloys in the form of a powder or wire are known in the prior art.

The aluminium alloy according to the invention is suitable in particular for producing lightweight metal workpieces by ALM process technologies and/or spraying methods. The aluminium alloy according to the invention is therefore preferably provided in the form of a powder, wire or filler material.

By way of example, the aluminium alloy is provided in the form of a powder comprising particles having an average particle size *d₅₀* of ≤100 µm, preferably 10 to 70 µm.

In one embodiment, the aluminium alloy is provided in the form of a powder comprising particles having an average particle size *d₅₀* of from 20 to 70 µm, preferably from 20 µm to 60 µm. Alternatively, the aluminium alloy is provided in the form of a wire having an average wire diameter of from 0.8 mm to 5 mm, preferably from 0.8 mm to 1.2 mm.

The aluminium alloy is preferably used as a powder when the aluminium alloy is to be processed by means of spraying methods. Spraying methods are known in the prior art. By way of example, the lightweight metal workpiece can be produced via cold gas, atmospheric plasma, HVOF or flame spraying. The average particle size *d₅₀* of the powder is preferably ≤100 µm, even more preferably from 50 to 90 µm, when the lightweight metal workpiece is produced via atmospheric plasma, HVOF or flame spraying. If the lightweight metal workpiece is produced via cold gas, the powder has an average particle size *d₅₀* of from 5 to 70 µm, preferably 5 to 60 µm.

The aluminium alloy according to the invention is therefore also suitable for producing lightweight metal workpieces by spraying methods. The aluminium alloy according to the invention is preferably provided in the form of a powder or wire.

In one embodiment a wire or a filler material is firstly produced from the powder of the aluminium alloy. Such production methods are known in the prior art.

The present invention also relates to a method for producing a lightweight metal workpiece by means of additive layer manufacturing (ALM). The lightweight metal workpieces preferably produced by a method as described hereinafter.

The method according to the invention for producing the lightweight metal workpiece as defined in claim 12.

In one embodiment the method for producing the lightweight metal workpiece consists of the following steps:
a) providing an aluminium alloy,
b) producing a lightweight metal workpiece comprising the aluminium alloy from step a) by means of additive layer manufacturing (ALM),
c) cooling the lightweight metal workpiece obtained in step b) to ≤200 °C with a solidification rate that is ≤10,000,000 K/sec, and
d) subjecting the lightweight metal workpiece from step c) to a heat treatment in a temperature range of from 100 to 400 °C.

According to step a), one requirement of the method according to the invention is therefore that an aluminium alloy is provided.

With regard to the aluminium alloys, reference is made to the above definitions in respect of the aluminium alloy and embodiments thereof.

According to step b) of the method according to the invention, a lightweight metal workpiece comprising the aluminium alloy is produced by means of additive layer manufacturing (ALM).

Methods for producing lightweight metal workpieces by means of additive layer manufacturing (ALM) are known in the prior art.

According to step c) of the method according to the invention, the lightweight metal workpiece obtained in step b) is cooled to ≤200 °C with a solidification rate that is ≤10,000,000 K/sec.

By way of example, the cooling in step c) is performed to ≤100 °C, preferably to room temperature.

It is known to a person skilled in the art that the solidification rate should be adapted to the diameter of the produced lightweight metal component part/workpiece and is dependent on the heat dissipation of the produced lightweight metal workpiece. A person skilled in the art will therefore adapt the solidification rate to the produced lightweight metal workpiece accordingly, insofar as possible. In one embodiment of the present invention, the cooling in step c) is performed with a solidification rate which is 1,000 to 10,000,000 K/sec, and preferably 5,000 to 100,000 K/sec. By way of example, the cooling in step c) is performed with a solidification step which is 10,000 to 100,000 K/sec, preferably 25,000 to 100,000 K/sec, most preferably 50,000 to 100,000 K/sec. Such a solidification rate in particular has the advantage that higher amounts of scandium can be added to the aluminium alloy.

Such methods for cooling lightweight metal workpieces are known in the prior art. By way of example, the lightweight metal workpiece can be cooled in a defined manner with the aid of cooling in moving air or by quenching in water.

Alternatively, the cooling in step c) is performed in the open air.

According to step d) of the method according to the invention, the lightweight metal workpiece obtained in step c) is subjected to a heat treatment in a temperature range of from 100 to 400 °C.

The lightweight metal workpiece obtained in step c) is preferably subjected to a heat treatment in a temperature range of from 100 to 350 °C.

In one embodiment of the present invention, the heat treatment according to step d) of the method according to the invention is performed in a temperature range of from 100 to 400 °C, for example in a temperature range from 100 to 350 °C, for a period of from 10 min to 50 h. The heat treatment can be performed typically at temperatures between 100 and 400 °C, for example in a temperature range of from 100 to 350 °C, for a period of from 10 min to 10 h. By way of example, the heat treatment is performed at temperatures between 100 and 400 °C, for example in a temperature range of from 100 to 350 °C, for a period of from 10 min to 5 h, or for a period of from 30 min to 4 h.

By way of example, the heat treatment can be performed in air, shielding gas, or in a vacuum. The heat treatment according to step d) of the method according to the invention can also be performed in a number of stages and/or steps. By way of example, the heat treatment according to step d) of the method according to the invention is performed in shielding gas, such as nitrogen or argon, at temperatures between 100 and 400 °C, for example at temperatures between 100 and 350 °C, for a period of from 30 min to 4 h.

In one embodiment of the present invention, the heat treatment according to step d) of the method according to the invention is performed directly after step c), i.e. the heat treatment according to step d) of the method according to the invention is carried out directly with the lightweight metal workpiece obtained in step c). In other words, the method according to the invention is carried out without one or more further method steps between the method steps c) and d). Alternatively, the heat treatment according to step d) of the method according to the invention is performed after step c), but at a later moment in time, i.e. the heat treatment according to step d) of the method according to the invention is carried out with the lightweight metal workpiece obtained in step c), but not immediately after step c). In other words, the method according to the invention is carried out without one or more further method steps between the method steps c) and d).

In one embodiment of the present invention, the heat-treated lightweight metal workpiece obtained in step d) can be subjected to a further cooling.

By way of example, the heat-treated lightweight metal workpiece obtained in step d) is cooled to room temperature. In one embodiment, the heat-treated lightweight metal workpiece obtained in step d) is cooled to room temperature in one step. Alternatively, the heat-treated lightweight metal workpiece obtained in step d) is cooled to room temperature in a number of steps. By way of example, the heat-treated lightweight metal workpiece obtained in step d) is cooled to a defined temperature below the heat treatment temperature in step d), followed by a cooling in the open air to room temperature.

In one embodiment of the present invention, the heat-treated lightweight metal workpiece obtained in step d) is cooled to room temperature with a cooling rate which is ≥10 K/sec, and preferably ≥10 to 20 K/sec. By way of example, the heat-treated lightweight metal workpiece is cooled to room temperature with a cooling rate in a range of ≥20 K/sec or in a range from 20 K/sec to 1000 K/sec.

Such methods for cooling heat-treated lightweight metal workpieces are known in the prior art. By way of example, the heat-treated lightweight metal workpiece can be cooled in a defined manner to room temperature with the aid of cooling in moving air or by quenching in water

Alternatively, the heat-treated lightweight metal workpiece obtained in step d) is cooled to room temperature in the open air.

The present invention also relates to a method for producing a lightweight metal workpiece as described in claim 12.

In one embodiment the method for producing the lightweight metal workpiece consists of the following steps:
a) providing an aluminium alloy,
b) producing a lightweight metal workpiece comprising the aluminium alloy from step a) by means of spraying methods,
c) cooling the lightweight metal workpiece obtained in step b) to ≤200 °C with a solidification rate that is ≤10,000,000 K/sec, and
d) subjecting the lightweight metal workpiece from step c) to a heat treatment in a temperature range of from 100 to 400 °C.

With regard to steps a), c) and d), reference is made to the above definitions in respect of the aluminium alloy, the method for producing a lightweight metal workpiece by means of additive layer manufacturing, and embodiments thereof.

Methods for producing lightweight metal workpieces by means of spraying methods are known in the prior art. By way of example, the lightweight metal workpiece can be produced via cold gas, atmospheric plasma, HVOF, and flame spraying.

On account of the advantages provided by the lightweight metal workpiece according to the invention, the present invention also relates to a lightweight metal workpiece comprising the aluminium alloy. By way of example, the lightweight metal workpiece consists of the aluminium alloy.

The present invention is also directed to the use of the aluminium alloy for producing heat-resistant lightweight metal workpieces by means of additive layer manufacturing (ALM) and/or spraying methods.

A further aspect of the present invention also relates to the use of the aluminium alloy for engine components, cylinder heads, crank housings, heat-resistant safety component parts, air-conditioning system components, structural aircraft component parts, in particular in the case of supersonic aircraft, power unit segments, pylons, or as coating material for component parts.

As mentioned above, the aluminium alloy according to the invention offers the advantage that it can be integrated directly in the production process in local or integral component part manufacture. A further advantage is the fact that complex thermo-mechanical treatments can be avoided by means of the aluminium alloy according to the invention, and therefore further costly and time-consuming process steps can be saved. A further advantage is the fact that the aluminium alloy according to the invention enables a heat treatment without material damage and/or thermal stresses/warping. A further advantage is the fact that, on account of the use of the aluminium alloy according to the invention, it is possible to dispense with complex component part levelling and also to increase the component part reproducibility and economic efficiency. A further advantage is in particular the fact that the aluminium alloy according to the invention is suitable for producing lightweight metal workpieces, in particular by ALM process technologies and/or spraying methods.

## Claims

1. An aluminium alloy consisting of
3.0 to 6.0 % by weight, in relation to the total weight of the alloy, of magnesium (Mg),
>1.0 to 4.0 % by weight, in relation to the total weight of the alloy, of silicon (Si),
0.005 to 0.2 % by weight, in relation to the total weight of the alloy, of titanium (Ti),
0.1 to 0.75 % by weight, in relation to the total weight of the alloy, of scandium (Sc),
0.01 to 0.375 % by weight, in relation to the total weight of the alloy, of zirconium (Zr),
0 to 0.5 % by weight, in relation to the total weight of the alloy, of at least one element selected from the group consisting of hafnium (Hf), molybdenum (Mo), terbium (Tb), niobium (Nb), gadolinium (Gd), erbium (Er), and vanadium (V),
0 to 0.8 % by weight, in relation to the total weight of the alloy, of manganese (Mn),
0 to 0.3 % by weight, in relation to the total weight of the alloy, of chromium (Cr),
0 to 1.0 % by weight, in relation to the total weight of the alloy, of copper (Cu), 0 to 0.05 % by weight, in relation to the total weight of the alloy, of zinc (Zn),
0 to 0.6 % by weight, in relation to the total weight of the alloy, of iron (Fe),
0 to 0.004 % by weight, in relation to the total weight of the alloy, of beryllium (Be),
the rest being aluminium with further impurities individually of at most 0.1 % by weight in relation to the total weight of the alloy, and on the whole at most 0.5 % by weight, in relation to the total weight of the alloy, wherein the amount of zirconium (Zr) and of titanium (Ti) in total corresponds at most to half the amount of scandium (Sc).

2. The aluminium alloy according to claim 1, wherein the alloy contains 3.5 to 5.5 % by weight, in relation to the total weight of the alloy, of magnesium (Mg) and/or 1.1 to 4.0 % by weight, in particular 1.1 to 3.0 % by weight, in relation to the total weight of the alloy, of silicon (Si).

3. The aluminium alloy according to either one of claims 1 or 2, wherein the alloy contains 0.01 to 0.2 % by weight, in particular 0.05 to 0.15 % by weight, in relation to the total weight of the alloy, of titanium (Ti) and/or 0.2 to 0.75 % by weight, in particular 0.25 to 0.7 % by weight, in relation to the total weight of the alloy, of scandium (Sc).

4. The aluminium alloy according to any one of claims 1 to 3, wherein the amount of zirconium (Zr) is <50 % of the amount of scandium (Sc).

5. The aluminium alloy according to any one of claims 1 to 4, wherein the alloy contains zirconium (Zr) in an amount such that the ratio by weight of scandium (Sc) to zirconium (Zr) [wt(Sc)/wt(Zr)] is from 2:0.9 to 10:1, in particular from 2:0.9 to 5:1.

6. The aluminium alloy according to any one of claims 1 to 5, wherein the alloy contains zirconium (Zr) and titanium (Ti) in a total amount such that the ratio by weight of scandium (Sc) to zirconium (Zr) and titanium (Ti) [wt(Sc)/(wt(Zr)+wt(Ti))] is from 2:1 to 10:1, in particular from 2:1 to 5:1.

7. The aluminium alloy according to any one of claims 1 to 6, wherein the alloy contains ≥0.001 % by weight, in relation to the total weight of the alloy, of at least one element selected from the group consisting of vanadium (V), gadolinium (Gd), chromium (Cr), copper (Cu), and zinc (Zn).

8. The aluminium alloy according to any one of claims 1 to 7, wherein the amount of hafnium (Hf) and/or terbium (Tb) corresponds individually to at most ¼ of the amount of scandium (Sc).

9. The aluminium alloy according to any one of claims 1 to 8, wherein the alloy contains 0.05 to 0.6 % by weight, in relation to the total weight of the alloy, of iron (Fe).

10. The aluminium alloy according to any one of claims 1 to 9, wherein the alloy contains ≤ 0.15 % by weight or 0.4 to 0.8 % by weight, in relation to the total weight of the alloy, of manganese (Mn).

11. The aluminium alloy according to any one of claims 1 to 10, wherein the alloy is provided in the form of a powder, in particular in the form of a powder comprising particles having an average particle size *d₅₀* of ≤100 µm, preferably 20 to 70 µm.

12. A method for producing a lightweight metal workpiece, said method comprising the following steps
a) providing an aluminium alloy according to any one of claims 1 to 11,
b) producing a lightweight metal workpiece comprising the aluminium alloy from step a) by means of additive layer manufacturing (ALM) and/or spraying methods,
c) cooling the lightweight metal workpiece obtained in step b) to ≤200 °C with a solidification rate that is ≤10,000,000 K/sec, and
d) subjecting the lightweight metal workpiece from step c) to a heat treatment in a temperature range of from 100 to 400 °C.

13. A lightweight metal workpiece comprising the aluminium alloy according to any one of claims 1 to 11.

14. Use of the aluminium alloy according to any one of claims 1 to 11 for producing heat-resistant and lightweight metal workpieces by means of additive layer manufacturing (ALM) and/or spraying methods.

15. Use of the aluminium alloy according to any one of claims 1 to 11 for engine components, cylinder heads, crank housings, heat-resistant safety component parts, air-conditioning system components, structural aircraft component parts, in particular in the case of supersonic aircraft, power unit segments, pylons, or as coating material for component parts.

## Patentansprüche

1. Eine Aluminiumlegierung, bestehend aus
3,0 bis 6,0 Gew.-%, bezogen auf das Gesamtgewicht der Legierung, Magnesium (Mg),
>1,0 bis 4,0 Gew.-%, bezogen auf das Gesamtgewicht der Legierung, Silizium (Si),
0,005 bis 0,2 Gew.-%, bezogen auf das Gesamtgewicht der Legierung, Titan (Ti),
0,1 bis 0,75 Gew.-%, bezogen auf das Gesamtgewicht der Legierung, Scandium (Sc),
0,01 bis 0,375 Gew.-%, bezogen auf das Gesamtgewicht der Legierung, Zirkonium (Zr),
0 bis 0,5 Gew.-%, bezogen auf das Gesamtgewicht der Legierung, mindestens eines Elements, ausgewählt aus der Gruppe bestehend aus Hafnium (Hf), Molybdän (Mo), Terbium (Tb), Niob (Nb), Gadolinium (Gd), Erbium (Er) und Vanadium (V),
0 bis 0,8 Gew.-%, bezogen auf das Gesamtgewicht der Legierung, Mangan (Mn),
0 bis 0,3 Gew.-%, bezogen auf das Gesamtgewicht der Legierung, Chrom (Cr),
0 bis 1,0 Gew.-%, bezogen auf das Gesamtgewicht der Legierung, Kupfer (Cu),
0 bis 0,05 Gew.-%, bezogen auf das Gesamtgewicht der Legierung, Zink (Zn),
0 bis 0,6 Gew.-%, bezogen auf das Gesamtgewicht der Legierung, Eisen (Fe),
0 bis 0,004 Gew.-%, bezogen auf das Gesamtgewicht der Legierung, Beryllium (Be),
wobei der Rest Aluminium mit weiteren Verunreinigungen von einzeln höchstens 0,1 Gew.-%, bezogen auf das Gesamtgewicht der Legierung, und insgesamt höchstens 0,5 Gew.-%, bezogen auf das Gesamtgewicht der Legierung, ist, wobei die Menge an Zirkonium (Zr) und an Titan (Ti) insgesamt höchstens der Hälfte der Menge an Scandium (Sc) entspricht.

2. Aluminiumlegierung nach Anspruch 1, wobei die Legierung 3,5 bis 5,5 Gew.-%, bezogen auf das Gesamtgewicht der Legierung, Magnesium (Mg) und/oder 1,1 bis 4,0 Gew.-%, insbesondere 1,1 bis 3,0 Gew.-%, bezogen auf das Gesamtgewicht der Legierung, Silizium (Si) enthält.

3. Aluminiumlegierung nach einem der Ansprüche 1 oder 2, wobei die Legierung enthält 0,01 bis 0,2 Gew.-%, insbesondere 0,05 bis 0,15 Gew.-%, bezogen auf das Gesamtgewicht der Legierung, Titan (Ti) und/oder 0,2 bis 0,75 Gew.-%, insbesondere 0,25 bis 0,7 Gew.-%, bezogen auf das Gesamtgewicht der Legierung, Scandium (Sc).

4. Aluminiumlegierung nach einem der Ansprüche 1 bis 3, wobei die Menge an Zirkonium (Zr) <50 % der Menge an Scandium (Sc) beträgt.

5. Aluminiumlegierung nach einem der Ansprüche 1 bis 4, wobei die Legierung Zirkonium (Zr) in einer solchen Menge enthält, dass das Gewichtsverhältnis von Scandium (Sc) zu Zirkonium (Zr) [Gew.-%(Sc)/Gew.-%(Zr)] 2:0,9 bis 10:1, insbesondere 2:0,9 bis 5:1, beträgt.

6. Aluminiumlegierung nach einem der Ansprüche 1 bis 5, wobei die Legierung Zirkonium (Zr) und Titan (Ti) in einer solchen Gesamtmenge enthält, dass das Gewichtsverhältnis von Scandium (Sc) zu Zirkonium (Zr) und Titan (Ti) [Gew.-%/(Sc)/(Gew.-%/Zr)+ Gew.-%/Ti)] von 2:1 bis 10:1, insbesondere von 2:1 bis 5:1, beträgt.

7. Aluminiumlegierung nach einem der Ansprüche 1 bis 6, wobei die Legierung ≥ 0,001 Gew.-%, bezogen auf das Gesamtgewicht der Legierung, mindestens eines Elements enthält, das aus der Gruppe ausgewählt ist, die aus Vanadium (V), Gadolinium (Gd), Chrom (Cr), Kupfer (Cu) und Zink (Zn) besteht.

8. Aluminiumlegierung nach einem der Ansprüche 1 bis 7, wobei die Menge an Hafnium (Hf) und/oder Terbium (Tb) einzeln höchstens 1/4 der Menge an Scandium (Sc) entspricht.

9. Aluminiumlegierung nach einem der Ansprüche 1 bis 8, wobei die Legierung 0,05 bis 0,6 Gew.-%, bezogen auf das Gesamtgewicht der Legierung, Eisen (Fe) enthält.

10. Aluminiumlegierung nach einem der Ansprüche 1 bis 9, wobei die Legierung enthält ≤ 0,15 Gew.-% oder 0,4 bis 0,8 Gew.-%, bezogen auf das Gesamtgewicht der Legierung, Mangan (Mn).

11. Aluminiumlegierung nach einem der Ansprüche 1 bis 10, wobei die Legierung in Form eines Pulvers bereitgestellt wird, insbesondere in Form eines Pulvers, das Teilchen mit einer mittleren Teilchengröße dso von ≤100 µm, vorzugsweise 20 bis 70 µm, umfasst.

12. Verfahren zur Herstellung eines Leichtmetallwerkstücks, wobei das Verfahren die folgenden Schritte umfasst
a) Bereitstellung einer Aluminiumlegierung nach einem der Ansprüche 1 bis 11,
b) Herstellung eines Leichtmetallwerkstücks aus der Aluminiumlegierung aus Schritt a) mittels Additivschichtherstellung (ALM) und/oder Spritzverfahren,
c) Abkühlen des in Schritt b) erhaltenen Leichtmetallwerkstücks auf ≤200 °C mit einer Erstarrungsgeschwindigkeit von ≤10.000.000 K/sec, und
d) Unterziehen des Leichtmetallwerkstücks aus Schritt c) einer Wärmebehandlung in einem Temperaturbereich von 100 bis 400 °C.

13. Leichtmetallwerkstück, das die Aluminiumlegierung nach einem der Ansprüche 1 bis 11 enthält.

14. Verwendung der Aluminiumlegierung nach einem der Ansprüche 1 bis 11 zur Herstellung hitzebeständiger und leichter Metallwerkstücke durch Additivschichtherstellung (ALM) und/oder Spritzverfahren.

15. Verwendung der Aluminiumlegierung nach einem der Ansprüche 1 bis 11 für Motorkomponenten, Zylinderköpfe, Kurbelgehäuse, hitzebeständige Sicherheitsbauteile, Komponenten von Klimaanlagen, Strukturbauteile von Flugzeugen, insbesondere bei Überschallflugzeugen, Triebwerkssegmenten, Pylonen oder als Beschichtungsmaterial für Bauteile.

## Revendications

1. Un alliage d'aluminium constitué de
3,0 à 6,0 % en poids, par rapport au poids total de l'alliage, de magnésium (Mg),
>1,0 à 4,0 % en poids, par rapport au poids total de l'alliage, de silicium (Si),
0,005 à 0,2 % en poids, par rapport au poids total de l'alliage, de titane (Ti),
0,1 à 0,75 % en poids, par rapport au poids total de l'alliage, de scandium (Sc),
0,01 à 0,375 % en poids, par rapport au poids total de l'alliage, de zirconium (Zr),
0 à 0,5 % en poids, par rapport au poids total de l'alliage, d'au moins un élément choisi dans le groupe constitué par le hafnium (Hf), le molybdène (Mo), le terbium (Tb), le niobium (Nb), le gadolinium (Gd), l'erbium (Er) et le vanadium (V),
0 à 0,8 % en poids, par rapport au poids total de l'alliage, de manganèse (Mn),
0 à 0,3 % en poids, par rapport au poids total de l'alliage, de chrome (Cr),
0 à 1,0 % en poids, par rapport au poids total de l'alliage, de cuivre (Cu),
0 à 0,05 % en poids, par rapport au poids total de l'alliage, de zinc (Zn),
0 à 0,6 % en poids, par rapport au poids total de l'alliage, de fer (Fe),
0 à 0,004 % en poids, par rapport au poids total de l'alliage, de béryllium (Be),
le reste étant de l'aluminium avec d'autres impuretés individuellement d'au plus 0,1 % en poids par rapport au poids total de l'alliage, et au total d'au plus 0,5 % en poids, par rapport au poids total de l'alliage, dans lequel la quantité de zirconium (Zr) et de titane (Ti) au total correspond au plus à la moitié de la quantité de scandium (Sc).

2. Alliage d'aluminium selon la revendication 1, dans lequel l'alliage contient 3,5 à 5,5 % en poids, par rapport au poids total de l'alliage, de magnésium (Mg) et/ou 1,1 à 4,0 % en poids, en particulier 1,1 à 3,0 % en poids, par rapport au poids total de l'alliage, de silicium (Si).

3. Alliage d'aluminium selon l'une des revendications 1 ou 2, dans lequel l'alliage contient 0,01 à 0,2 % en poids, notamment 0,05 à 0,15 % en poids, par rapport au poids total de l'alliage, de titane (Ti) et/ou 0,2 à 0,75 % en poids, notamment 0,25 à 0,7 % en poids, par rapport au poids total de l'alliage, de scandium (Sc).

4. Alliage d'aluminium selon l'une quelconque des revendications 1 à 3, dans lequel la quantité de zirconium (Zr) est <50 % de la quantité de scandium (Sc).

5. Alliage d'aluminium selon l'une quelconque des revendications 1 à 4, dans lequel l'alliage contient du zirconium (Zr) en une quantité telle que le rapport en poids du scandium (Sc) au zirconium (Zr) [wt(Sc)/wt(Zr)] est de 2:0,9 à 10:1, en particulier de 2:0,9 à 5:1.

6. Alliage d'aluminium selon l'une quelconque des revendications 1 à 5, dans lequel l'alliage contient du zirconium (Zr) et du titane (Ti) en une quantité totale telle que le rapport pondéral du scandium (Sc) au zirconium (Zr) et au titane (Ti) [wt(Sc)/(wt(Zr)+wt(Ti)] est de 2:1 à 10:1, en particulier de 2:1 à 5:1.

7. Alliage d'aluminium selon l'une quelconque des revendications 1 à 6, dans lequel l'alliage contient ≥0,001 % en poids, par rapport au poids total de l'alliage, d'au moins un élément choisi dans le groupe constitué par le vanadium (V), le gadolinium (Gd), le chrome (Cr), le cuivre (Cu) et le zinc (Zn).

8. Alliage d'aluminium selon l'une quelconque des revendications 1 à 7, dans lequel la quantité de hafnium (Hf) et/ou de terbium (Tb) correspond individuellement à au plus 1/4 de la quantité de scandium (Sc).

9. Alliage d'aluminium selon l'une quelconque des revendications 1 à 8, dans lequel l'alliage contient 0,05 à 0,6 % en poids, par rapport au poids total de l'alliage, de fer (Fe).

10. Alliage d'aluminium selon l'une quelconque des revendications 1 à 9, dans lequel l'alliage contient ≤ 0,15 % en poids ou 0,4 à 0,8 % en poids, par rapport au poids total de l'alliage, de manganèse (Mn).

11. Alliage d'aluminium selon l'une quelconque des revendications 1 à 10, dans lequel l'alliage est fourni sous forme de poudre, en particulier sous forme de poudre comprenant des particules ayant une taille moyenne d₅₀ de ≤100 µm, de préférence de 20 à 70 µm.

12. Procédé de production d'une pièce en métal léger, ledit procédé comprenant les étapes suivantes
a) fournir un alliage d'aluminium selon l'une des revendications 1 à 11,
b) la production d'une pièce en métal léger comprenant l'alliage d'aluminium de l'étape a) au moyen de méthodes de fabrication par couche additive (ALM) et/ou de pulvérisation,
c) refroidissement de la pièce en métal léger obtenue à l'étape b) à ≤200 °C avec un taux de solidification qui est de ≤10 000 000 K/sec, et
d) soumettre la pièce en métal léger de l'étape c) à un traitement thermique dans une plage de température comprise entre 100 et 400 °C.

13. Pièce en métal léger comprenant l'alliage d'aluminium selon l'une quelconque des revendications 1 à 11.

14. Utilisation de l'alliage d'aluminium selon l'une quelconque des revendications 1 à 11 pour la production de pièces en métal léger et résistant à la chaleur au moyen de méthodes de fabrication par couche additive (ALM) et/ou de pulvérisation.

15. Utilisation de l'alliage d'aluminium selon l'une des revendications 1 à 11 pour des composants de moteur, des culasses, des carters de vilebrequin, des composants de sécurité résistant à la chaleur, des composants de système de climatisation, des composants structurels d'avion, en particulier dans le cas d'avions supersoniques, des segments de groupe motopropulseur, des pylônes, ou comme matériau de revêtement pour des composants.
